# EUROPEAN PATENT SPECIFICATION

(11) **EP 1 966 928 B1**
(45) Date of publication and mention of the grant of the patent: **30.08.2017**
(21) Application number: 06779548.4
(22) Date of filing: 26.09.2006
(51) Int. Cl.: H04L 9/08, G11B 7/00

(54) **DERIVING CRYPTOGRAPHIC KEYS**
ABLEITEN KRYPTOGRAPHISCHER SCHLÜSSEL
DERIVATION DE CLES DE CHIFFREMENT

(30) Priority: 22.12.2005 US 315890
(43) Date of publication of application: 10.09.2008
(73) Proprietor: NCR Corporation, Duluth, GA 30096 (US)
(72) Inventor: FORREST, Simon, Dundee DD3 6BW (GB); ROSS, Gary, Edinburgh EH9 2BZ (GB)
(74) Representative: Secerna LLP
(86) International application number: PCT/GB2006/003571
(87) International publication number: WO 2007/071893

(56) References cited:
- EP-A1- 1 204 111
- EP-A2- 1 152 378
- GB-A- 2 386 245
- US-A1- 2004 262 547
- US-A1- 2005 143 249

## Description

The present invention relates to deriving cryptographic keys. Cryptographic keys are used with a cryptographic algorithm to encrypt and decrypt information, for example, to secure the use and transmission of that information. Cryptographic keys are commonly used in systems that require high electronic security, such as automated teller machines (ATMs), which encrypt a personal identification number (PIN) entered by a customer via an encrypting keypad (EKP) module.

A typical EKP module is both tamper-resistant (it is difficult to tamper with) and tamper-responsive (it destroys any stored cryptographic keys in the event of the EKP being opened). An EKP module comprises: a housing through which a keypad protrudes; and an encryption unit located within the housing. When a user enters his or her PIN at an ATM via the EKP, the EKP uses a stored cryptographic key and algorithm, such as Triple Data Encryption Standard (Triple DES), to encrypt the entered digits. The encrypted digits are transmitted from the EKP to a controller within the ATM, which appends account information and transaction details to form a PINblock. The PINblock is then forwarded to an ATM switch, which routes the PINblock to an authorization center. The authorization center then parses the PINblock, decrypts the encrypted PIN to verify identity of the user, and authorizes the transaction. EP 1204111 A1 shows the derivation of an encryption key from a function of unique information stored on a Compact Disc CD.

Currently, distributing cryptographic keys for EKPs is manpower intensive because multiple service personnel are commonly used to enter a key at a given ATM, each one knowing only a portion of the overall key to maintain key secrecy. The invention is defined by the appended claims. Various other features will become apparent from the following specific description, which is given by way of example, with reference to the accompanying drawings.
Fig 1 illustrates a schematic view of a SST in the form of an ATM according to one embodiment of the present invention;
Fig 2 is a block diagram of an ATM network including the ATM of Fig 1;
Figs 3a to 3c are three different diagrams of a module (the EKP module) of the ATM of Fig 1;
Fig 4 is a pictorial view of a card for use with the EKP module of Figs 3a to 3c; and
Fig 5 is a flowchart illustrating steps involved in deriving a cryptographic key using the EKP of Figs 3a to 3c.

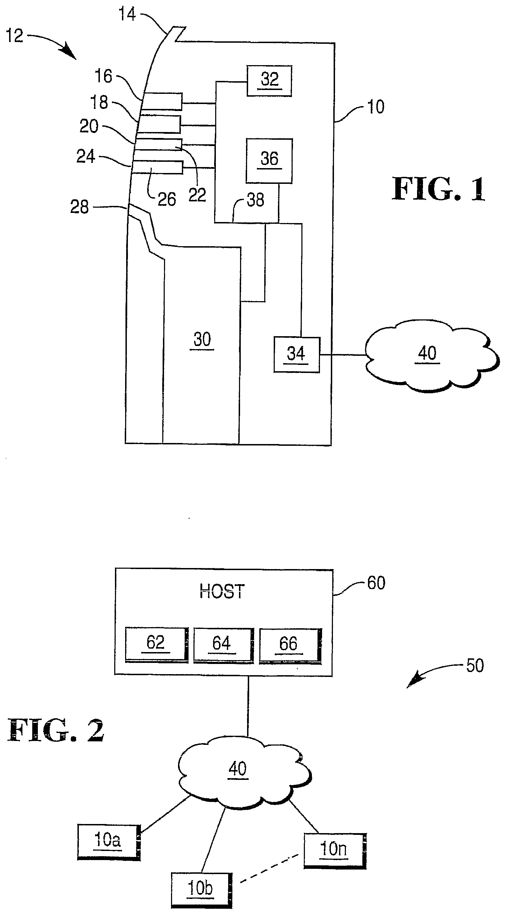

Reference is first made to Fig 1, which is a cross-sectional view of a self-service terminal (SST) 10 in the form of an ATM according to one embodiment of the present invention. The ATM 10 includes a user interface 12 for input of information to, and output of information from, the ATM 10. The user interface 12 comprises an openable fascia 14 having apertures aligning with modules within the ATM 10. A display aperture aligns with a display module 16 for presenting transaction information; a keypad aperture aligns with an input device in the form of an encrypting keypad (EKP) module 18; and a plurality of media input and output slots are aligned with respective media input and output modules located behind the molded fascia 14. These include a magnetic card entry/exit slot 20 that aligns with a magnetic card reader/writer (MCRW) module 22, a receipt printer slot 24 that aligns with a receipt printer module 26, and a cash dispense slot 28 that aligns with a cash dispenser module 30. These modules can be accessed by opening the fascia 14.

Reference is now also made to Fig 2, which is a block diagram of a system 50 of ATMs 10a-n, each of these ATMs being identical to the ATM 10 of Fig 1.

The ATM 10 further includes an internal journal printer module 32 for creating a record of all transactions executed by the ATM 10, and a network communication module 34 for communicating with a remote host 60 (Fig 2) via a network 62. The remote host validates account information, authorizes transactions, and downloads software and data to the ATMs 10 connected thereto. The ATM 10 also includes a controller module 36 for controlling operation of the various modules, and a bus 38 for interconnecting all of the modules and conveying data therebetween.

The host 60 includes an authorization facility 62 for authorizing transactions, a back-office facility 64, and a software repository 66 for storing software programs for distribution to the ATMs 10a-n via the network 40.

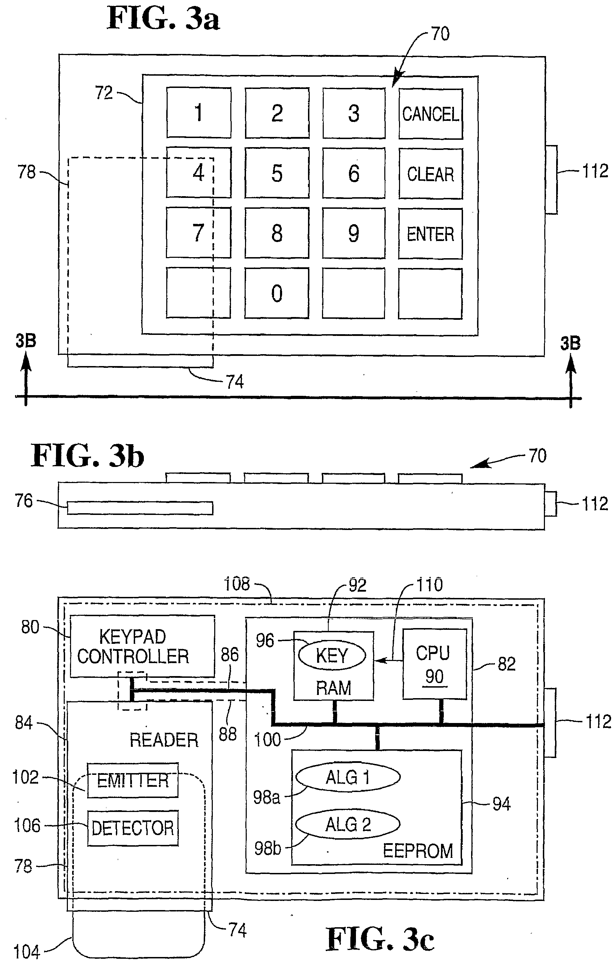

Reference is now made to Figs 3a to 3c, which show the EKP module 18 in more detail. Fig 3a is a pictorial view of the EKP module 18, having a keypad 70 including sixteen individual keys, each key having either a digit (with one of the numbers from 0 to 9) etched or printed thereon, words such as "Cancel," "Clear", and "Enter," or such like, etched or printed thereon, or left blank. This type of keypad is also referred to as a PIN pad. The keypad 70 protrudes from an upper surface of the EKP module 18. When closed, the ATM fascia 14 keypad aperture (not shown) aligns with a keypad perimeter 72 so that only the PIN pad 70 (of the EKP module 18) is visible to an ATM customer through the fascia keypad aperture. Fig 3b is a pictorial side view of the EKP module 18 in the direction of arrows 3B-3B on Fig 3a. The EKP module 18 also includes a throat 74 defining a card receiving aperture 76 (Fig 3b) leading to a guidance housing 78 into which an authorized person may insert a cryptographic card.

Fig 3b is a schematic diagram of the components within the EKP module 18. These components include: a keypad controller 80 for detecting what keys are depressed on the keypad 70; an encryption unit 82, and a reader 84. Data from the keypad 70 is transmitted to the encryption unit 82 via an internal tamper-detecting bus 86 enveloped by a membrane shield 88 that detects any attempt to access the data lines in the bus 86 covered by the shield 88.

The encryption unit 82 includes a processor 90, volatile memory 92 in the form of random access memory (RAM), and non-volatile memory 94 in the form of electrically erasable programmable read only memory (EEPROM). The RAM 92 stores a cryptographic key 96. The EEPROM 94 stores at least one algorithm 98a (PIN encryption algorithm 98a) for encrypting information entered via keypad 70 using the cryptographic key 96, and one algorithm 98b (key deriving algorithm 98b) for deriving a new cryptographic key. The processor 90, the RAM 92, and the EEPROM 94 communicate via an internal bus 100.

The reader 84 includes an emitter 102 for exciting a token (in the form of a card) 104 (shown partially inserted in Fig 3c) by illuminating the card 104, and a detector 106 for detecting emission from the card 102 in response to the illumination. The reader 84 communicates with the encryption unit 82 via the tamper-detecting bus 86.

The EKP module 18 also includes a tamper-detecting membrane 108 for detecting any attempt to open or otherwise access the EKP module 18. In addition, the encryption unit 82 includes an erase line 110 coupled to the RAM 92. The EKP module 18 is tamper-responsive, so that if any of the tamper-detecting mechanisms (the tamper-detecting bus 86 and the tamper-detecting membrane 108) detects a breach, then the cryptographic processor 90 activates the erase line 110 to delete the cryptographic key 96 from the RAM 92.

In normal operation the EKP module 18 outputs encrypted data to the ATM controller module 36 via an output port 112 in the form of a USB port.

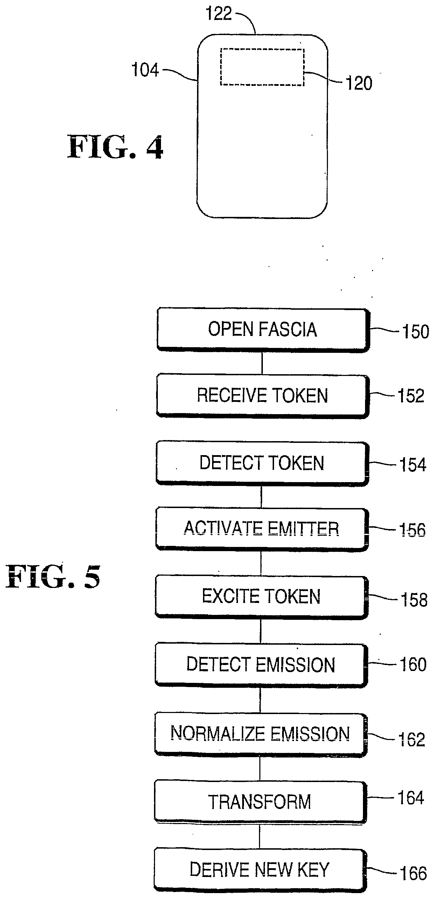

Reference is now made to Fig 4, which illustrates the card 104 in more detail. The card 104 includes a tag area 120 which comprises a plurality of microscopic secure tags mounted on the card by clear adhesive. The microscopic secure tags comprise a borosilicate glass dopes with rare earth ions, as described in US patent application number 2004/0262547, entitled "Security Labelling," and US patent application number 2005/0143249, entitled "Security Labels which are Difficult to Counterfeit", both of which are incorporated herein by reference.

When an owner of the ATM system 50 wishes to replace the cryptographic key 96 on each ATM 10 with a new cryptographic key, the owner instructs one of the ATM service personnel (referred to hereinafter as a servicer) to take the card 104 to each ATM 10. The card 104 has been prepared so that the ATM system 50 knows what the new cryptographic key will be (so that it can decrypt the PIN at the remote host 60). Once the ATMs 10 have been updated with a new cryptographic key, the ATM owner will update the authorization facility 62 to install the new cryptographic key therein.

The process for loading a new cryptographic key is illustrated in Fig 5, which is a flowchart illustrating the steps involved. When the servicer arrives at the ATM, he or she unlocks and then opens the fascia 14 (step 150) to get access to the modules mounted within the ATM. By opening the fascia 14, the servicer can access the throat 74 (which is not visible to an ATM customer when the fascia 14 is closed) and insert the card 104 into the card receiving aperture 76 (step 152). When the card 104 is fully inserted, a leading edge 122 of the card 104 closes a microswitch (not shown) within the reader 84, which indicates that the card 104 is fully inserted (step 154). The microswitch is positioned so that when the microswitch is closed by the leading edge 122, the tag area 120 is in registration with the emitter 102. In response to detecting the microswitch closing, the reader 84 activates the emitter 102 (step 156), which emits a pulse of light to radiate the tag area 120. This pulse of light excites the secure tags in the tag area (step 158). In response to this excitation, the secure tags luminesce. The secure tags include rare earth ions, which have relatively long luminescence lifetimes, so the luminescence can still be detected once the excitation has ceased.

Once the excitation has ceased, the detector 106 is activated and detects luminescence from the secure tags (step 160). The detector 106 includes a CMOS imager having forty different elements and a diffraction grating (or prism) for splitting incident luminescence spatially based on its wavelength. By accurately aligning the CMOS imager and the diffraction grating, the CMOS imager measures luminescence intensity in increments of ten nanometers of wavelength from 400nm to 790nm. To state this another way, a luminescence spectrum is sampled at every ten nanometers between 400 and 790nm. Each CMOS element corresponds to one sampled wavelength, so that the forty CMOS elements cover the entire spectrum from 400nm to 790nm in 10nm increments. Thus, the CMOS imager produces forty measurement points.

The luminescence measured from the secure tags is an attribute of the card 104, and the EKP module 18 can use this attribute of the card 104 to generate a seed for deriving a new cryptographic key.

To generate a seed, the EKP module 18 first processes the detected luminescence to normalize the luminescence spectrum (step 162), that is, to normalize the intensity measurements at each of the forty measurement points. The luminescence is normalized by selecting a datum point (one of the forty points) and scaling the measured intensity at each of the forty measurement points relative to the measured intensity at the selected datum point. This step is required because the absolute values of luminescence intensity are arbitrary and change between measurements, but the relative values (that is, the intensity of one peak compared with the intensity of another peak on the same luminescence spectrum) is constant. Normalizing a luminescence spectrum using a datum point from that spectrum ensures that the results are reproducible.

Once the luminescence spectrum (which is the intensities at the forty measurement points) has been normalized, the normalized intensity measurements are transformed (step 164) to produce a sequence of bits that can be used as a seed for deriving a new key.

The transformation process involves mapping each of the normalized intensity measurements to one of eight intensity levels, using digitization error correction to take account of boundary problems (that is, when a scaled intensity measurement is at the boundary between two adjacent intensity levels). Each of the eight intensity levels is assigned a unique sequence of three bits (binary coding of eight different levels). Measuring a luminescence spectrum as described above produces a first series of forty mapped intensities, each mapped intensity having a value between one and eight. Thus, a sequence of 120 bits is produced from the forty measurement points. This sequence of 120 bits can be used a seed from which a new cryptographic key can be derived.

Digitization error correction techniques are well know in analog to digital conversion and will not be described in detail herein. The use of error correction, or inclusion of other information regarding the measured intensities may change the number of bits in the bit sequence.

In this example, the seed (the 120 bits) is used to generate a 56 bit encryption key that is based on the Data Encryption Standard (DES) (step 166). Deriving a cryptographic key is a well-known technique to those of skill in the art so will not be described in detail herein; however, these details can be found in the *"*Handbook of Applied Cryptography", by A. Menezes, P. van Oorschot, and S. Vanstone, CRC Press, 1996 or *"*Applied Cryptography" by Bruce Schneier, John Wiley & Sons, 1996.

Once the new cryptographic key is derived, the EKP module stores this new cryptographic key in RAM 92.

If a larger seed is required (that is, a seed with more bits), then multiple luminescence spectra can be measured and concatenated to form a larger seed. Various methods may be used to generate multiple different spectra. The following is an example of one of those methods, which is based on the decay rates of the luminescent emission from a rare earth ion at specific wavelengths. By measuring a spectrum after a first time has elapsed from de-activation of the emitter 102 and then measuring a spectrum after a second time has elapsed from de-activation of the emitter, two different spectra are obtained. It should be ensured that the first and second time periods are shorter than the decay time of the luminescence, otherwise only background luminescence will be recorded. The reason that two different spectra are obtained is that different transitions within the secure tag have different decay times, so that one transition may have a longer or shorter decay time than another. Each peak observed on a luminescence spectrum corresponds to one or more transitions, so the shape of the spectrum (that is, the intensity of each peak) will be different at different times during the luminescence decay process. If more than one rare earth ion is used in the secure tags, then each rare earth ion will typically have a different decay rate, which means that different transitions (peaks) in the luminescent spectrum resulting from illumination of the secure tag will decay at different times. This is because the decay rate of a transition depends on which rare earth ion is associated with that transition.

By measuring two different spectra, it is possible to create two 120 bit sequences, which can be concatenated to form a 240 bit sequence. This 240 bit sequence can then be used as a seed from which a cryptographic key can be derived. The skilled person will now realize that a large number of spectra can be recorded if a large seed is required. Furthermore, more samples from each spectrum (for example at every 5nm) may be used.

It should also be appreciated that the number of different intensity levels for mapping should be selected so that the difference between adjacent amplitudes is not less than the noise contribution (electrical, thermal, and optical), otherwise the noise may shift the intensity by more than one amplitude level.

In the general case for this method, X different spectra are recorded. For each of the X spectra, intensity is measured at Y different wavelengths. For each of the Y different wavelengths, the intensity at that point is scaled with reference to a datum point and mapped to one of Z different intensity ranges. In the above example using a single luminescence spectrum, X is one, Y is forty, and Z is eight, yielding a 120 bit sequence for use as a seed; whereas in the above example using two luminescence spectra, X is two, Y is forty, and Z is eight, yielding a 240 bit sequence for use as a seed. In the general case, values for X, Y and Z can be chosen differently, and may be selected according to the rare earth dopant or dopants used in the secure tag. Similarly, the datum point may be different for each measured spectrum in a time-decay-based method of deriving a seed. The datum point may be based on the peak intensity, an intensity at approximately half of the peak intensity, or some other convenient intensity.

While the invention has been disclosed with respect to a limited number of embodiments, those skilled in the art will appreciate numerous modifications and variations therefrom. It is intended that the appended claims cover such modifications and variations as fall within the scope of the invention.

For example, the time-decay method of deriving a seed for a key is only one of many methods that could be used to derive a seed. An alternative method for deriving a seed for a new cryptographic key is to use the old key to operate on the emission spectrum measured from the token presented to the reader. This could use a predetermined portion of the spectrum from the token (for example 500nm to 600nm), and a predetermined time delay, to generate a mini-key. This mini-key could then be used by the reader to operate on the concatenated intensity number derived from the token emission, and thereby generate a new key.

Some of the possible ways of deriving a new key include using: the old key, a time dependent algorithm, and/or a fixed algorithm.

It is also possible to have a method for confirming that the correct key has been generated. An additional code could be loaded into the token (for example, an integrated circuit card into which the rare earth tags are incorporated) and read by the EKP module 18. The EKP module 18 would apply the new key to the additional code and output a response. The response could be matched to information printed on the token, thereby allowing the person presenting the token to confirm the success of the key generation process.

In the above embodiment, the token reader is incorporated into the EKP module; in other embodiments, the token reader may be incorporated into the MCRW module (or another type of token reader that an ATM customer uses to identify himself or herself), thereby ensuring that the servicer does not have to open the fascia to load a new key.

In the above embodiment, the token is a card. In other embodiments, the token may be an I-button, a smart ring, a memory cell, or any other convenient token.

In the above embodiment, the card 104 is presented to the reader 84 by inserting it into the reader 84; in other embodiments a token can be presented to the reader by placing it in close proximity to the reader 84.

In the above embodiment, the secure tags comprise borosilicate glass particles doped with lanthanide ions; however in other embodiments different secure tags may be used, such as secure tags based on other chemicals. The secure tags may be in the form of quantum dots, a different luminescent pigment, or such like.

In the above embodiment, the attribute was based on luminescence; in other embodiments a different attribute may be used.

In the above embodiment, a DES key was derived from the seed value. In other embodiments, the seed value could be used to generate other cryptographic keys for many different cryptographic methods. Some examples of different cryptographic methods that can be used include methods based on asymmetrical (e.g., RSA, Diffie-Hellman, and El Gamal) and symmetrical (e.g., DES, Triple DES, and Rijndael Cipher) encryption. These cryptographic techniques are well know in the art and examples of these and others can be found in the *"*Handbook of Applied Cryptography", by A. Menezes, P. van Oorschot, and S. Vanstone, CRC Press, 1996 or *"*Applied Cryptography" by Bruce Schneier, John Wiley & Sons, 1996.

In the above embodiment the luminescence of the token was stimulated by illuminating it, though in other embodiments the luminescence of the token may be stimulated with other forms of electromagnetic radiation (x-rays). In still other embodiments the luminescence may be stimulated by, a chemical reaction (chemoluminescence), temperature (thermoluminescence), a biological process (bioluminescence), or such like.

In other embodiments, the reader may require a token to be permanently presented to the reader to authorize the EKP module to use a cryptographic key already stored in memory. This has the advantage that a key is only released for use when the token is present. It also has the advantage that it is very difficult to ascertain which key is being used (when multiple keys are stored in the memory) because the key is referenced by the secure tag using an algorithm built into the token reader. Hence only by reading the tag can the key be released for use. If there is no token, then the EKP cannot access a key. The token may remain in place so that the key is made available and used on demand. This has the advantage that the key is never exposed within the EKP so that it cannot be captured by any of the conventional attacks on an EKP. This could remove the requirement for the tamper detection and key delete functions, since even if the EKP is compromised there is no way to access the key referenced by or derived from the token.

It would be possible to have multiple tags on the card for further validation, such as of a new key, since the previous key may have to be present to authenticate the new key. Using this system, added authentication is provided to avoid other keys being inserted either out of sequence or previous keys being used. Using a card based tag system there would also be a reduction in the manpower required to enter the keys into the ATM, since the tag is unreadable to anything but the tag reader one engineer could be provided with a stack of cards and update a number of ATMs without the keys ever being compromised.

Multiple key enablers on one token could also be used for updating other secure aspects of the ATM, such as verifying software downloads or updates. This would only permit engineers (or servicers) having the correct keys to install or validate new software, the key in the token would be used to verify a digital signature in the code which was generated when it was compiled. Again this would be secure since the software would only be installed if and when the correct key is presented, and the key cannot be reverse engineered or tampered with to allow other software to be installed.

The tags could be printed on the surface of the token if this was required - but an integral tag may be more secure. The tag could also be incorporated into a more complex or at least proprietary form, for example, one or more glass rods, or such like. This would make the reader even more secure since the form-factor of the token providing the key could not be fitted into other devices and damaged. It would also mean that the reader could be designed to securely capture the specific form-factor of the token.

In the above embodiment, the EKP is a PINpad (that is, it does not contain keys having a letter thereon, such as a conventional QWERTY keyboard). In other embodiments, the EKP may include more than sixteen keys; for example, over thirty keys may be provided, one key for each letter of the alphabet, plus function keys, numerical digits, and such like.

It will now be appreciated that the above embodiment, and/or the alternatives listed above, have the following advantages when applied to the secure distribution of encryption keys. These include: a significant man-power cost saving, because only one person is required for the secure distribution of keys to ATMs and EKPs. This could either be a service engineer or the tokens could be mailed to the ATM owner who could update the keys. The token cannot be read without the correct reader. The key may reside on the card and never be exposed within the EKP. This solution does not require anyone to type.in digits for use in a key, so human error is reduced or obviated. The key that will be derived may be destroyed after manufacture so that it cannot be reverse-engineered. Tamper detection and key destroying mechanisms may not be required in the EKP, although they may still be used. The key can be applied to other high security applications, such as validation and authentication of software downloads of digitally signed software. The application of a token for resolving the issues of key distribution provides a very secure and simple method of distributing encryption keys.

## Claims

1. A method of deriving a cryptographic key from a token comprising:
ascertaining an attribute of an emission from the token;
processing (164) the attribute to generate a seed; and
deriving (166) a cryptographic key from the seed,
**characterized in that**
the attribute is luminescence intensity at each of a plurality of wavelengths, and
wherein processing (164) the attribute to generate a seed includes mapping each luminescence intensity to a corresponding binary code.

2. A method according to claim 1, further comprising:
normalizing (162) the attribute of the emission from the token prior to processing the attribute to generate a seed.

3. A method according to claim 1, wherein ascertaining an attribute of an emission from the token comprises:
exciting (158) the token; and
detecting (160) luminescence from the material in response to the excitation.

4. A method according to claim 1, wherein the attribute is obtained from the decay rate of the resulting emission.

5. An apparatus for deriving a cryptographic key comprising:
a reader (84) adapted to ascertain an attribute of an emission from a token;
and a processor (90) coupled to the reader (84) and operable to:
(i) process the attribute to generate a seed; and
(ii) derive a cryptographic key from the seed,
**characterized in that** the attribute is luminescence across a wavelength range, so that the attribute comprises a plurality of intensity values, one value for each wavelength used.

6. An apparatus according to claim 5, wherein the processor (90) is operable to process the attribute to generate a seed by:
normalizing the attribute; and applying an algorithm to the normalized attribute to map the normalized attribute to a sequence of bits.

7. An apparatus according to claim 5, wherein the apparatus is a self-service terminal incorporating an encrypting keypad.

8. An apparatus according to claim 7, wherein the terminal includes a media dispenser.

9. An encrypting keypad comprising an apparatus according to claim 5.

## Patentansprüche

1. Verfahren zum Ableiten eines kryptografischen Schlüssels von einem Token, umfassend:
Ermitteln eines Attributs einer Ausgabe von dem Token;
Verarbeiten (164) des Attributs, um einen Seed zu erzeugen; und
Ableiten (166) eines kryptografischen Schlüssels von dem Seed, **dadurch gekennzeichnet, dass**
das Attribut Lumineszenzintensität bei jeder von mehreren Wellenlängen ist, und wobei das Verarbeiten (164) des Attributs, um einen Seed zu erzeugen, das Zuordnen von jeder Lumineszenzintensität zu einem entsprechenden Binärcode umfasst.

2. Verfahren nach Anspruch 1, ferner, umfassend:
Normalisieren (162) des Attributs der Ausgabe von dem Token vor dem Verarbeiten des Attributs, um einen Seed zu erzeugen.

3. Verfahren nach Anspruch 1, wobei das Ermitteln eines Attributs einer Ausgabe von dem Token umfasst:
Anregen (158) des Token; und
Detektieren (160) von Lumineszenz von dem Material als Reaktion auf die Anregung.

4. Verfahren nach Anspruch 1, wobei das Attribut von der Abklingrate der resultierenden Ausgabe erlangt wird.

5. Vorrichtung zum Ableiten eines kryptografischen Schlüssels, umfassend:
einen Leser (84), der angepasst ist, ein Attribut einer Ausgabe von einem Token zu bestimmen;
und einen Prozessor (90), der mit dem Leser (84) gekoppelt und betriebsfähig ist zum:
(i) Verarbeiten des Attributs, um einen Seed zu erzeugen; und
(ii) Ableiten eines kryptografischen Schlüssels von dem Seed, **dadurch gekennzeichnet, dass** das Attribut Lumineszenz über einen Wellenlängenbereich ist, sodass das Attribut mehrere Intensitätswerte, einen Wert für jede verwendete Wellenlänge, umfasst.

6. Vorrichtung nach Anspruch 5, wobei der Prozessor (90) betriebsfähig ist, das Attribut zu verarbeiten, um einen Seed zu erzeugen durch:
Normalisieren des Attributs; und Anwenden eines Algorithmus auf das normalisierte Attribut, um das normalisierte Attribut zu einer Bit-Folge zuzuordnen.

7. Vorrichtung nach Anspruch 5, wobei die Vorrichtung ein Selbstbedienungsterminal ist, das ein verschlüsselndes Tastenfeld einschließt.

8. Vorrichtung nach Anspruch 7, wobei das Terminal eine Medienausgabevorrichtung umfasst.

9. Verschlüsselndes Tastenfeld, das eine Vorrichtung nach Anspruch 5 umfasst.

## Revendications

1. Procédé de dérivation d'une clé cryptographique à partir d'un jeton comprenant :
la vérification d'un attribut d'une émission à partir du jeton;
le traitement (164) de l'attribut pour générer une graine ; et
la dérivation (166) d'une clé cryptographique à partir de la graine, **caractérisé en ce que**
l'attribut est l'intensité de la luminescence à chacune d'une pluralité de longueurs d'ondes, et dans lequel le traitement (164) de l'attribut pour générer une graine comprend la cartographie de chaque intensité de luminescence à un code binaire correspondant.

2. Procédé selon la revendication 1, comprenant en outre :
la normalisation (162) de l'attribut de l'émission à partir du jeton avant de passer au traitement de l'attribut pour générer une graine.

3. Procédé selon la revendication 1, dans lequel la vérification d'un attribut d'une émission à partir du jeton comprend :
la stimulation (158) du jeton ; et
la détection (160) de la luminescence à partir du matériel en réaction à la stimulation.

4. Procédé selon la revendication 1, dans lequel l'attribut s'obtient à partir du taux de détérioration de l'émission résultante.

5. Appareil de dérivation d'une clé cryptographique comprenant :
un lecteur (84) adapté pour vérifier un attribut d'une émission à partir d'un jeton ;
et un processeur (90) couplé au lecteur (84) et utilisable pour :
(i) le traitement de l'attribut afin de générer une graine ; et
(ii) la dérivation d'une clé cryptographique à partir de la graine, **caractérisé en ce que** l'attribut est la luminescence sur une plage de longueurs d'onde, de sorte que l'attribut comprend une pluralité de valeurs d'intensité, une valeur pour chaque longueur d'onde utilisée.

6. Appareil selon la revendication 5, dans lequel le processeur (90) est utilisable pour traiter l'attribut pour générer une graine en :
normalisant l'attribut ; et en appliquant un algorithme à l'attribut normalisé pour cartographier l'attribut normalisé à une séquence de bits.

7. Appareil selon la revendication 5, dans lequel l'appareil est un terminal en libre-service comprenant un clavier de cryptage.

8. Appareil selon la revendication 7, dans lequel le terminal comprend un distributeur de média.

9. Clavier de cryptage comprenant un appareil selon la revendication 5.
